# EUROPÄISCHE PATENTSCHRIFT

(11) **EP 1 139 001 B1**
(45) Veröffentlichungstag und Bekanntmachung des Hinweises auf die Patenterteilung: **08.01.2003**
(21) Anmeldenummer: 01103167.1
(22) Anmeldetag: 10.02.2001
(51) Int. Cl.: F16L 37/084

(54) **Steckkupplung für Druck- bzw. Strömungsmittelleitungen**
Plug connection for pressurized fluid pipes
Raccord enfichable pour tuyaux pour fluide sous pression

(30) Priorität: 30.03.2000 DE 20005903 U
(43) Veröffentlichungstag der Anmeldung: 04.10.2001
(73) Patentinhaber: Voss Fluid GmbH + Co. KG, 51688 Wipperfürth (DE)
(72) Erfinder: Berghaus, Gerd, 51515 Kürten (DE); Schröer, Bettina, 51688 Wipperfürth (DE); Hester, Hilmar, 51688 Wipperfürth (DE)
(74) Vertreter: Patentanwälte Dr. Solf & Zapf

(56) Entgegenhaltungen:
- EP-A- 0 373 920
- FR-A- 1 460 993
- US-A- 5 005 877

## Beschreibung

Die vorliegende Erfindung betrifft eine Steckkupplung für Druck- bzw. Strömungsmittelleitungen, bestehend aus einem Gehäuseteil und einem Steckerteil, wobei das Steckerteil mit einem Steckerschaft abgedichtet in eine Aufnahmeöffnung des Gehäuseteils einsteckbar und mittels einer Verriegelungseinrichtung gegen Lösen arretierbar ist, wobei die Verriegelungseinrichtung ein im Wesentlichen ringförmiges, in einer Ringkammer innerhalb der Aufnahmeöffnung des Gehäuseteils gelagertes, elastisch verformbares und im eingesteckten Zustand des Steckerteils eine am Steckerschaft zwischen einem ersten Schaftbereich mit größerem Durchmesser und einem zweiten Schaftbereich mit kleinerem Durchmesser gebildete Raststufe formschlüssig rastend hintergreifendes Halteelement aufweist, und wobei das Halteelement derart aus mehreren einzelnen Ringsegmenten sowie einem diese konzentrisch umschließenden und mit radial wirkender Federkraft beaufschlagenden Federringelement besteht, daß beim Steckvorgang jedes Ringsegment aus einer Grundstellung heraus radial nach außen gegen die Federkraft bzw. radial nach innen in die Grundstellung durch die Federkraft beweglich ist.

Eine derartige Steckkupplung ist beispielsweise aus der EP-A-0 881 421 bekannt. Ferner wird auch auf die EP-A-0 373 920 und die FR-A-1 460 993 verwiesen.

Bei dieser Art von Steckkupplung besteht das Halteelement aus einzelnen Ringsegmenten, die selbst relativ formstabil ausgebildet sind, so daß sie sich beim Steckvorgang nicht selbst elastisch verformen, sondern nur jeweils radial aufgrund der Federelastizität des Federringelementes bewegen können.

Der vorliegenden Erfindung liegt die Aufgabe zugrunde, die bekannte Steckkupplung insbesondere im Bereich des Halteelementes so zu verbessern, daß bei kleiner und kompakter Bauform (insbesondere in radialer Richtung bezogen auf die Kupplungsachse) eine hohe Haltekraft erreicht wird.

Erfindungsgemäß wird dies gemäß dem Patentanspruch 1 dadurch erreicht, daß jedes Ringsegment als Kreisringausschnitt mit einem Innenradius ausgebildet ist, der derart größer als die Hälfte des kleineren Durchmessers des zweiten Schaftbereichs des Steckerschaftes ist, daß jedes Ringsegment in der Grundstellung mit seinen beiden in Umfangsrichtung weisenden Endbereichen in radialer Richtung weiter von dem kleineren Durchmesser beabstandet ist als in seinem mittleren Umfangsbereich. Somit entspricht der Innenradius jedes Ringsegmentes bewußt nicht dem Krümmungsradius der Stecker-Umfangsfläche im zweiten Schaftbereich des Steckerschaftes, sondern vorzugsweise statt dessen etwa dem Krümmungsradius des ersten, im Durchmesser größeren bzw. größten Schaftbereichs.

Der Erfindung liegt hierbei die Erkenntnis zugrunde, daß bei den bekannten Steckkupplungen aufgrund der Kreisbogenform jedes Ringsegment sich mit seinem mittigen Bereich in radialer Richtung nicht nur über einen Weg hinweg bewegen muß, der der Radius-Differenz zwischen den beiden Schaftabschnitten des Steckerschaftes entspricht, d.h. der radial gemessenen Breite der Stecker-Raststufe. Vielmehr muß wegen der an den Krümmungsradius des zweiten Schaftbereichs angepaßten Krümmung jedes Ringsegment weiter in radialer Richtung bewegt werden, damit auch seine in Umfangsrichtung weisenden Enden aus dem Bereich der Raststufe kommen, damit der Steckerschaft eingesteckt bzw. entnommen werden kann.

Durch die vorliegende Erfindung wird demgegenüber erreicht, daß sich jedes Ringsegment nur etwa um die radiale Breite der Stecker-Raststufe zu bewegen braucht, was zu einer kompakten Bauform der gesamten Kupplung führt.

Vorzugsweise besteht das Halteelement aus vier gleichartigen (und sich deshalb in Umfangsrichtung jeweils über 90° erstreckenden), in sich formstabilen Ringsegmenten mit im wesentlichen rechteckigem Ringquerschnitt. Im gesteckten und arretierten Zustand des Steckerschaftes befindet sich jedes Ringsegment axial in Löserichtung des Steckerschaftes gesehen einerseits mit einer ersten, äußeren Teilfläche in axialer Überdeckung mit einer radialen Flankenfläche der Gehäuse-Ringkammer sowie andererseits mit einer zweiten, inneren Teilfläche in axialer Überdeckung mit der radialen Raststufe des Steckerschaftes. Die Überdeckungsflächen können so ausgelegt sein, daß sehr hohe Haltekräfte gewährleistet werden können. Erfindungsgemäß beträgt das Verhältnis der ersten Teilfläche zu der zweiten Teilfläche mindestens etwa 1 : 1. Vorzugsweise aber liegt dieses Verhältnis etwa im Bereich von 1,4 : 1 bis 1,6 : 1, insbesondere bei etwa 1,5 : 1. Dabei wird eine sehr gute und kippfreie Abstützung der Ringsegmente innerhalb der Gehäuse-Ringkammer über ihre jeweils außen liegende, größere Überdeckungsfläche erreicht, zumal sich außen auch ein großer Überdeckungswinkel in Umfangsrichtung ergibt.

Bei dem erfindungsgemäßen Halteelement handelt es sich zudem um eine "käfiglose" Ausführung. Dies bedeutet, daß die einzelnen Ringsegmente nicht in einem Haltekäfig gelagert sind, sondern unmittelbar in der Ringkammer, wobei sie in ihrer Grundstellung in Umfangsrichtung direkt aneinander anliegen. Auch dies trägt zu hohen Haltekräften bei, da wegen der direkten Anlage der Ringsegmente aneinander besonders große Überdeckungen erreicht werden können. Dabei ergibt sich aufgrund der erfindungsgemäßen Radius-Auslegung der Ringsegmente insgesamt etwa die Form eines Polygons, wobei die Ringsegmente mit ihren aneinander anliegenden Stirnflächen (abgerundete) Polygonecken und mit ihrem Kreisringverlauf entsprechend kreisbogenförmig gekrümmte Polygonseiten bilden. Im gespreizten bzw. radial nach außen bewegten Zustand liegen dann die Ringsegmente mit ihren Innenflächen auf einem Kreis, dessen Durchmesser im Wesentlichen dem größeren Durchmesser des ersten Schaftabschnittes des Steckerschaftes entspricht.

Weitere vorteilhafte Ausgestaltungsmerkmale der Erfindung sind in den Unteransprüchen enthalten.

Anhand von mehreren, in der Zeichnung veranschaulichten, bevorzugten Ausführungsbeispielen soll die Erfindung nun genauer erläutert werden. Dabei zeigen
- Fig. 1: einen Längsschnitt durch eine erste Ausführungsform einer erfindungsgemäßen Steckkupplung,
- Fig. 2: einen Querschnitt nur der erfindungsgemäßen Ringsegmente des Halteelementes in der Schnittebene II-II gemäß Fig. 1,
- Fig. 3: eine Draufsicht eines Rohlings zur Herstellung der erfindungsgemäßen Ringsegmente nach Fig. 2,
- Fig. 4: eine Draufsicht wie in Fig. 3 in einer Zwischenphase der Herstellung der Ringsegmente,
- Fig.5: eine Darstellung analog zu Fig. 1 einer zweiten Ausführungsform der erfindungsgemäßen Steckkupplung,
- Fig. 6: eine gesonderte Schnittdarstellung eines Einzelteils aus Fig. 5 und zwar einer bevorzugten Ausführung einer Lösehülse,
- Fig. 7: eine Draufsicht in Pfeilrichtung VII gemäß Fig. 6,
- Fig. 8: eine Vorderansicht in Pfeilrichtung VIII gemäß Fig. 7,
- Fig. 9: eine Schnittdarstellung analog zu Fig. 1 und 5 eines weiteren Einzelteils, und zwar einer möglichen Ausführung eines Federringelementes,
- Fig. 10: eine Draufsicht in Pfeilrichtung X gemäß Fig. 9,
- Fig. 11: eine Ansicht ähnlich Fig. 10, jedoch in einer Ausführungsvariante und als Querschnitt,
- Fig. 12: einen Schnitt XII-XII gemäß Fig. 11,
- Fig. 13: eine weitere Ausführungsform der Steckkupplung in einer Ansicht analog zu Fig. 1,
- Fig. 14: einen Teil-Halbschnitt durch eine weitere Ausführungsform der Steckkupplung,
- Fig. 15: noch eine weitere Ausführungsform der Steckkupplung in Längsschnittdarstellung,
- Fig. 16: einen Querschnitt in der Ebene XVI-XVI gemäß Fig. 15 und
- Fig. 17: einen stark vergrößerten Querschnitt im Bereich des erfindungsgemäßen Halteelementes zur Erläuterung der besonderen Geometrie der Ringsegmente.

In den verschiedenen Figuren der Zeichnung sind gleiche Teile stets mit den gleichen Bezugszeichen versehen und brauchen daher im Folgenden auch jeweils nur einmal beschrieben zu werden.

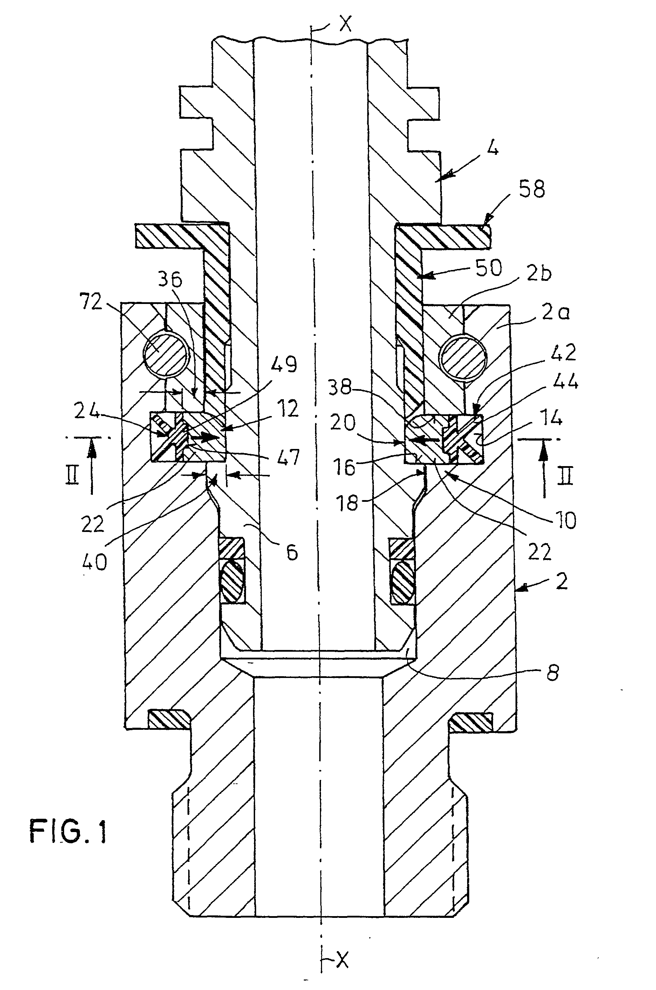

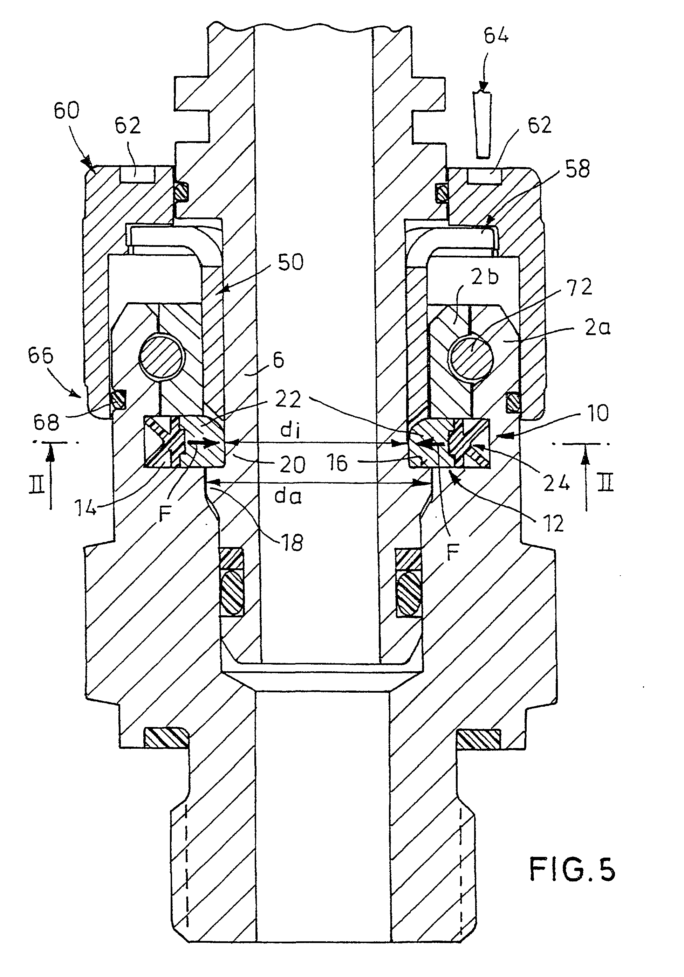

Wie sich zunächst aus Fig. 1 ergibt, besteht eine erfindungsgemäße Steckkupplung aus einem Gehäuseteil 2 und einem Steckerteil 4. Das Steckerteil 4 ist mit einem Steckerschaft 6 abgedichtet in eine Aufnahmeöffnung 8 des Gehäuseteils 2 einsteckbar und in seiner eingesteckten Stellung mittels einer Verriegelungseinrichtung 10 gegen Lösen arretierbar. Die Verriegelungseinrichtung 10 weist ein im wesentlichen ringförmiges Halteelement 12 auf; welches in einer Ringkammer 14 innerhalb der Aufnahmeöffnung 8 des Gehäuseteils 2 gelagert ist und derart elastisch verformbar bzw. beweglich ist, daß es im eingesteckten Zustand des Steckerteils 4 eine am Steckerschaft 6 gebildete Raststufe 16 formschlüssig rastend hintergreift. Die Raststufe 16 ist als radiale Fläche zwischen einem ersten Schaftbereich 18 mit größerem bzw. größtem Durchmesser _{*da*} (vgl. dazu auch Fig. 5, 16 und 17) und einem zweiten Schaftbereich 20 mit kleinerem Durchmesser _{*di*} gebildet.

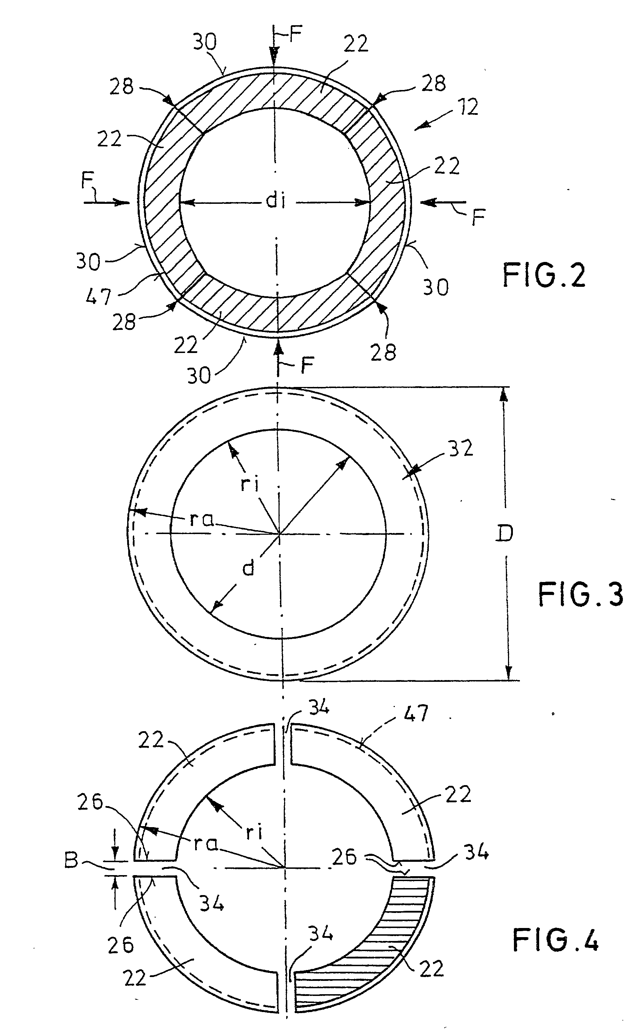

Wie sich nun insbesondere aus Fig. 2, 16 und 17 ergibt, besteht das Halteelement 12 aus mehreren, im dargestellten Beispiel insbesondere vier, einzelnen Ringsegmenten 22 sowie einem diese konzentrisch umschließenden und mit radial wirkender Federkraft *F* beaufschlagenden Federringelement 24. Dadurch ist beim Steckvorgang jedes Ringsegment 22 im Wesentlichen ohne eigene elastische Verformung aus einer Grundstellung heraus radial nach außen gegen die Federkraft *F* bzw. radial nach innen in die Grundstellung durch die Federkraft *F* beweglich.

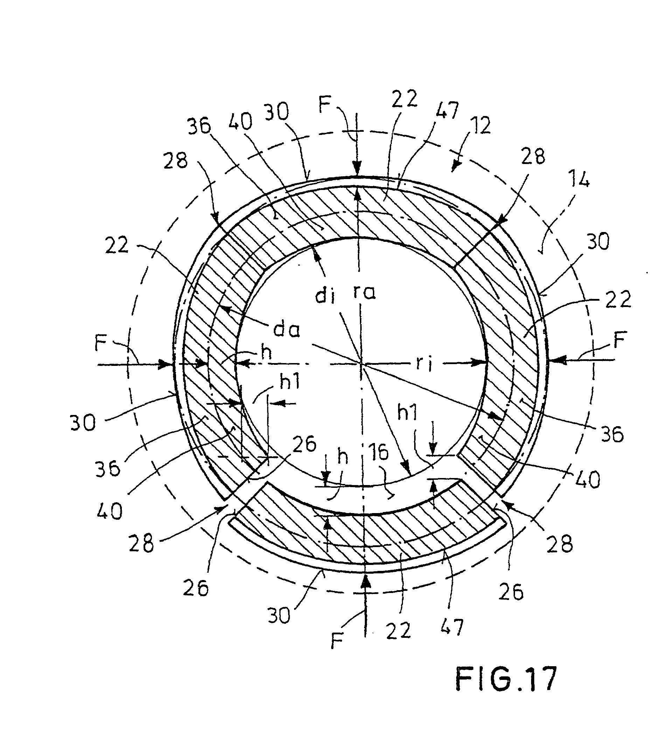

Wie sich nun am besten aus der vergrößerten Darstellung in Fig. 17 ergibt, ist erfindungsgemäß jedes Ringsegment 22 als Kreisringausschnitt mit einem Innenradius _{*ri*} ausgebildet, der größer als die Hälfte des kleineren Durchmessers _{*di*} des zweiten Schaftbereichs 20 des Steckerschaftes 6 ist. Vorzugsweise ist der Innenradius _{*ri*} jedes Ringsegmentes 22 zumindest annähernd gleich der Hälfte des größeren bzw. größten Druchmessers _{*da*} des ersten Schaftbereichs 18 des Steckerschaftes 6. Demzufolge entspricht der Innenradius _{*ri*} dem Krümmungsradius _{*da*}/2 des ersten Schaftbereichs 18. Dies läßt sich in Fig. 17 anhand des unteren, in seiner radial nach außen bewegten Stellung gezeigten Ringsegmentes 22 gut erkennen. Jedes Ringsegment 22 braucht durch die Erfindung mit seinem mittleren Umfangsbereich nur über eine Strecke _{*h*} radial bewegt zu werden, weil seine umfänglichen Endbereiche in der Grundstellung in radialer Bewegungsrichtung gesehen nur um eine Strecke _{*h1*} die Raststufe 16 hintergreifen, wobei vorzugsweise _{*h1*} gleich _{*h*} ist. Dabei liegen die Ringsegmente 22 in ihrer Grundstellung vorzugsweise in Umfangsrichtung derart direkt aneinander an, daß sie gemeinsam etwa die Form eines Polygons bilden, indem die Ringsegmente 22 mit ihren aneinander anliegenden Stirnflächen 26 praktisch Polygonecken 28 und mit ihrem Kreisringverlauf entsprechend kreisbogenförmig gekrümmte Polygonseiten 30 bilden.

Gemäß Fig. 2 bis 4 werden die Ringsegmente 22 vorzugsweise aus einem kreisringförmigen Rohling 32 hergestellt. Dieser Rohling 32 weist einen inneren Durchmesser _{*d*} und einen Außendurchmesser *D* auf bzw. den Innenradius _{*ri*} und den Außenradius _{*ra*}. Insofern ist *D* = 2 . _{*ra*} und _{*d*} = 2 . _{*ri*}_{.} Gemäß Fig. 4 wird dann dieser Rohling 32 in die Ringsegmente 22 geteilt, und zwar durch radiale Trennschnitte 34, die bezüglich ihrer Spaltbreite _{*B*} derart ausgelegt sind, daß die Ringsegmente 22 in ihrer aneinander anliegenden Grundstellung nach Fig. 2 mit ihren mittleren Bereichen diametral genau um den Abstand _{*di*} beabstandet sind.

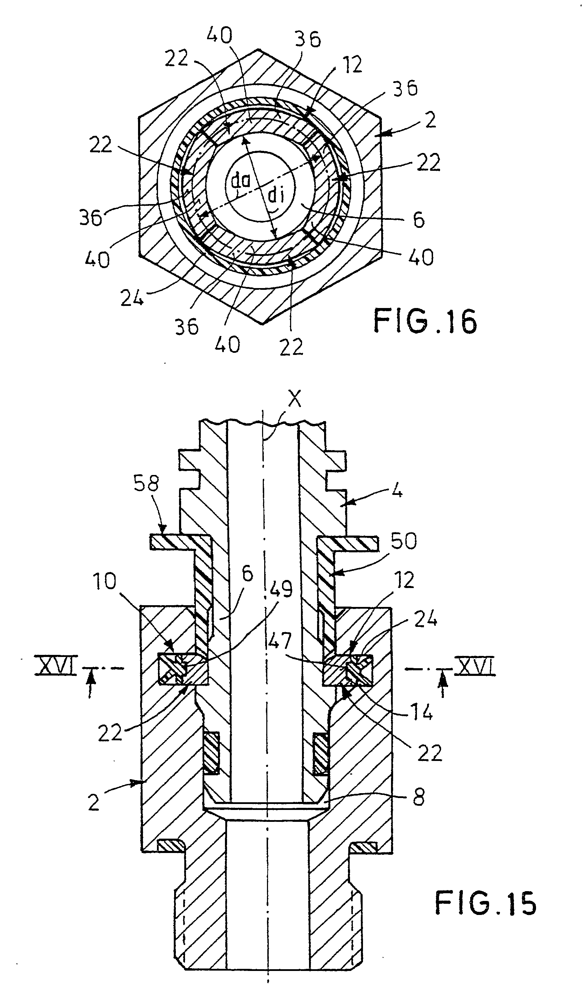

Wie sich weiterhin aus Fig. 16 und insbesondere Fig. 17 ergibt, befindet sich im gesteckten und arretierten Zustand des Steckerschaftes 6, d.h. in der Grundstellung des Halteelementes 12, jedes Ringsegment 22 axial in Löserichtung des Steckerschaftes 6 gesehen einerseits mit einer ersten, äußeren Teilfläche 36 in axialer Überdeckung mit einer radialen Flankenfläche 38 der Gehäuse-Ringkammer 14 (vgl. dazu auch Fig. 1) und andererseits mit einer zweiten, inneren Teilfläche 40 in axialer Überdeckung mit der radialen Raststufe 16 des Steckerschaftes 6. Erfindungsgemäß beträgt das Verhältnis der ersten Teilfläche 36 zu der zweiten Teilfläche 40 jeweils mindestens etwa 1 : 1. In bevorzugter Ausgestaltung liegt dieses Verhältnis aber im Bereich von 1,4 : 1 bis 1,6 : 1, insbesondere bei etwa 1,5 : 1. Dies bedeutet, daß die erste Teilfläche 36 etwa 55 bis 65% und die zweite Teilfläche etwa 35 bis 45% der Gesamtfläche des jeweiligen Ringsegmentes 22 betragen.

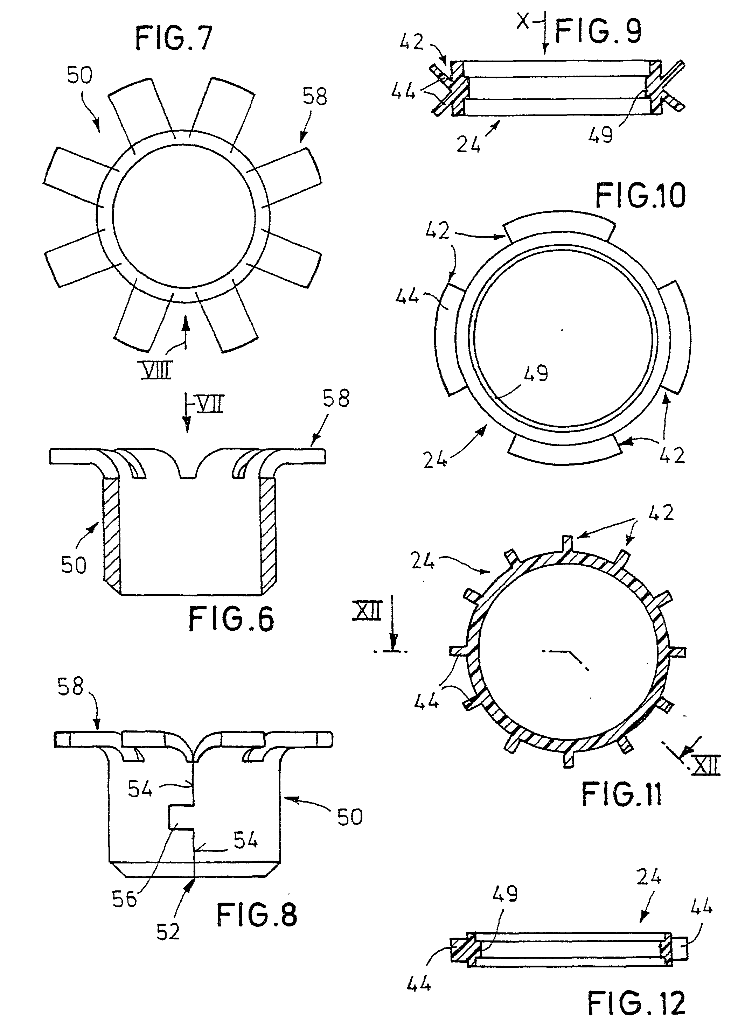

in weiterer vorteilhafter Ausgestaltung der Erfindung sind die Ringsegmente 22 über Zentriermittel 42 selbstzentrierend in der Ringkammer 14 des Gehäuseteils 2 gelagert. In den bevorzugten Ausführungsformen ist dazu das Federringelement 24 als Profilring aus einem gummielastischer Material ausgebildet und weist auf seinem Außenumfang einstückig angeformte, elastisch verformbare Zentrierelemente 44 zur abstützenden Anlage innerhalb der Ringkammer des Gehäuseteils 2 auf. Hierzu wird ergänzend auf Fig. 9 und 10 verwiesen, wonach es sich bei den Zentrierelementen 44 um radial nach außen und schräg in axialer Richtung divergierend ausgerichtete, lippenartige Ansätze handelt. Es können unterschiedlich viele Zentrierelemente 44 in insbesondere radialsymmetrischer Anordnung vorgesehen sein. Gemäß Fig. 11 und 12 können die Zentrierelemente 44 auch als radial ausgerichtete, sternartige Stegansätze ausgebildet sein. Durch die Art, Anordnung und/oder Anzahl der Zentrierelemente 44 läßt sich das Verformungsverhalten beim Steckvorgang beeinflussen.

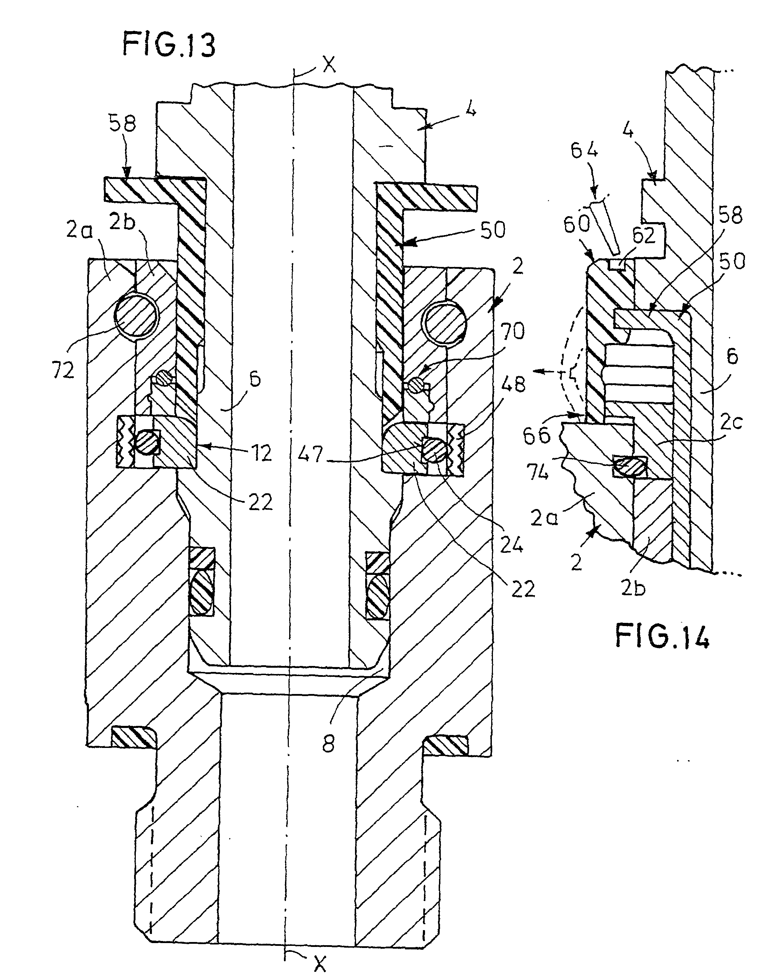

In der in Fig. 13 veranschaulichten Ausführung ist das Federringelement 24 beispielsweise von einem einfachen O-Ring gebildet. Dabei sind die Ringsegmente 22 über das Federringelement 24 radial nach außen gegen einen elastisch verformbaren bzw. komprimierbaren Zentrierring 48 innerhalb der Ringkammer 14 abgestützt. Der Zentrierring 48 kann beispielsweise aus Schaumstoff oder dergleichen bestehen.

In allen Fällen ist es vorteilhaft, wenn die Ringsegmente 22 auf ihrer äußeren Umfangsfläche eine Ringnut 47 aufweisen, in die das Federringelement 24 bereichsweise eingreift, so daß eine gegen Verrutschen gesicherte Verbindung erreicht wird. Gemäß Fig. 9 kann dazu der Profilring einen inneren radialen Ringstegansatz 49 aufweisen, der dann formschlüssig in der Ringnut 47 der Ringsegmente 22 sitzt (vgl. Fig. 1, 5 und 15).

Um ein Lösen des Steckerteils 5 vom Gehäuseteil 2 zu ermöglichen, ist vorzugsweise eine axial verschiebbar geführte Lösehülse 50 vorgesehen, mit der die Ringsegmente 22 zum Lösen und Herausziehen des Steckerteils 4 gespreizt werden können. In den Ausführungen nach Fig. 1, 13 und 15 ist die Lösehülse 50 als ein durchgehend axial und radial geschlitztes Formteil aus Kunststoff ausgebildet. Durch die Schlitzung ist die Lösehülse 50 auf den Steckerschaft 6 aufmontierbar. In der Ausführung nach Fig. 5, vgl. dazu auch Fig. 6 bis 8, ist die Lösehülse 50 als Blechformteil ausgebildet, wobei gemäß Fig. 8 zweckmäßigerweise an einer am Umfang gebildeten Nahtstelle 52 zwei Blechkanten 54 in axialer Richtung gesehen formschlüssig gegeneinander fixiert sind. Vorzugsweise handelt es sich um mindestens einen Verbindungslappen 56 der einen Blechkante 54, die in Umfangsrichtung in eine entsprechende Ausnehmung der anderen Kante eingreift. In beiden Fällen weist die Lösehülle 50 einen außerhalb der Gehäuse-Aufnahmeöffnung zugänglichen Betätigungsabschnitt 58 auf, der beispielsweise gemäß Fig. 1 als radialer, etwa flanschartiger Ringansatz ausgebildet ist oder gemäß Fig. 5 bis 8 aus mehreren sternförmig und radial angeordneten Ansätzen besteht.

Weiterhin ist bevorzugt eine den Verbindungsbereich zwischen Steckerteil 4 und Gehäuseteil 2 umschließende Schutzkappe 60 vorgesehen (s. dazu Fig. 5 und 14). Diese Schutzkappe 60 kann grundsätzlich aus einem beliebigen, z.B. formstabilen oder elastisch verformbaren Material, wie Metall oder Kunststoff, bestehen, beispielsweise einem Elastomer mit einer Härte von insbesondere etwa 90 Shore A. Zudem ist es zweckmäßig, wenn es sich um ein UV-beständiges Material handelt. In bevorzugter Ausgestaltung ist die Schutzkappe 60 mit der Lösehülse 50, insbesondere mit deren Betätigungsabschnitt 58, derart zu einer Funktionseinheit verbunden, daß die Lösehülse 50 über die Schutzkappe 60 betätigbar ist. Dazu weist die Schutzkappe 60 auf ihrer in Löserichtung weisenden Stirnseite eine vorzugsweise ringnutförmige Vertiefung 62 zum abrutschfreien Angriff für ein Werkzeug, beispielsweise eine in Fig. 5 angedeutete Schraubendreherklinge 64, auf. Zusätzlich wird auch auf Fig. 14 hingewiesen. Die Schutzkappe 60 weist in ihrem Inneren eine ringnutförmige Ausnehmung auf, in die der Betätigungsabschnitt 58 der Lösehülse 50 eingreift. indem die Lösehülse 50 Bestandteil des Steckerteils 4 ist, gilt dieses somit auch für die Schutzkappe 60.

Dadurch lassen sich auf recht einfache Weise Mittel zur Einsteckkontrolle derart realisieren, daß eine korrekte Arretierung des Steckerteils 4 über das eingerastete Halteelement 12 anhand der Relativstellung zwischen Stecker- und Gehäuseteil 4, 2 insbesondere visuell erkennbar ist. Gemäß Fig. 5 dient vorteilhafterweise die Schutzkappe 60 zur Einsteckkontrolle, indem sie mit ihrem freien Kappenende 66 erst in der korrekt gesteckten und arretierten Stellung eine Markierung am Gehäuseteil 2 erreicht oder überdeckt. Als Markierung kann mit Vorteil ein Dichtring 68 dienen, wodurch zusätzlich auch eine gute Schmutzabdichtung gewährleistet ist. Gemäß Fig. 14 kann die Schutzkappe 60 bei der Löseverschiebung der Lösehülse 50 elastisch radial nach außen verformbar sein. Hier wird die Steckkontrolle dadurch erreicht, daß in der korrekten Stellung die Schutzkappe 60 mit ihrem freien Ende 66 auf einer Stirnfläche des Gehäuseteils 2 aufliegt.

Was nun die Ausführung nach Fig. 13 betrifft, so ist dabei ein derart axial zwischen dem Halteelement 12 und dem Gehäuseteil 2 angeordnetes Drehlager 70 vorgesehen, daß das eingesteckte und über das Halteelement 12 gegen Lösen arretierte Steckerteil 4 auch bei Beaufschlagung mit einer in Löserichtung wirkenden Kraft (mechanische Zugkraft und/oder durch innere Druckmittelbeaufschlagung) über das Drehlager 70 relativ zu dem Gehäuseteil 2 um die Kupplungsachse _{*X*} verdrehbar ist.

Zur Montage des Halteelementes 12 ist es weiterhin zweckmäßig, wenn das Gehäuseteil 2 derart aus zwei miteinander verbundenen Teilen, und zwar aus einem Basisteil 2a und einem im wesentlichen ringförmigen Einsatzteil 2b, besteht, daß die das Halteelement 12 aufnehmende Ringkammer 14 von diesen beiden Teilen 2a und 2b begrenzt wird. Gemäß Fig. 1, 5 und 13 wird das Einsatzteil 2b innerhalb des Basisteils 2a fixiert, indem in einen zwischen beiden Teilen gebildeten Ringkanal ein Drahtelement 72 über eine nicht dargestellte tangentiale Einführöffnung eingeschoben wird. Bei der Ausführung nach Fig. 14 wird das Einsatzteil 2b zunächst in dem Basisteil 2a in versenkter Anordnung durch einen üblichen Drahtsprengring 74 fixiert, wobei danach der Drahtsprengring 74 durch eine zusätzliche Einsatzbuchse 2c fixiert wird.

In Fig. 15 ist noch eine weitere Alternative veranschaulicht, wobei das Gehäuseteil 2 zumindest im Bereich derAufnahmeöffnung 8 und der Ringkammer 14 einteilig ausgebildet ist. Dabei wird die Ringkammer 14 beispielsweise spanend durch einen Drehprozess oder auf andere Weise eingeformt.

Um hierbei das erfindungsgemäße Halteelement 12 montieren zu können, wird zunächst das Federringelement 24 in die Ringkammer 14 des Gehäuseteils 2 eingelegt Danach werden die Ringsegmente 22 des Halteelementes 12 einzeln nacheinander axial in die Aufnahmeöffnung 8 eingeführt und radial gegen das Federringelement 24 in die Ringkammer 14 eingebracht. Hierbei wird jedes Ringsegment 22 solange in der Ringkammer 14 zwischenfixiert, bis sich alle Ringelemente 22 gegenseitig durch Anlage aneinander fixieren (nach Art eines Gewölbemauerwerks).

## Patentansprüche

1. Steckkupplung für Druck- bzw. Strömungsmittelleitungen, bestehend aus einem Gehäuseteil (2) und einem Steckerteil (4), wobei das Steckerteil (4) mit einem Steckerschaft (6) abgedichtet in eine Aufnahmeöffnung (8) des Gehäuseteils (2) einsteckbar und mittels einer Verriegelungseinrichtung (10) gegen Lösen arretierbar ist, wobei die Verriegelungseinrichtung (10) ein im Wesentlichen ringförmiges, in einer Ringkammer (14) innerhalb der Aufnahmeöffnung (8) des Gehäuseteils (2) gelagertes, elastisch verformbares und im eingesteckten Zustand des Steckerteils (4) eine am Steckerschaft (6) zwischen einem ersten Schaftbereich (18) mit größerem Durchmesser (da) und einem zweiten Schaftbereich (20) mit kleinerem Durchmesser (*di*) gebildete Raststufe (16) formschlüssig rastend hintergreifendes Halteelement (12) aufweist, und wobei das Halteelement (12) derart aus mehreren einzelnen Ringsegmenten (22) sowie einem diese mit radial wirkender Federkraft (*F*) beaufschlagenden Federelement (24) besteht, dass beim Steckvorgang jedes Ringsegment (22) aus einer Grundstellung heraus radial nach außen gegen die Federkraft (*F*) bzw. radial nach innen in die Grundstellung durch die Federkraft (*F*) beweglich ist,
**dadurch gekennzeichnet, dass** jedes Ringsegment (22) als Kreisringausschnitt mit einem Innenradius (*ri*) ausgebildet ist, der derart größer als die Hälfte des kleineren Durchmessers (*di*) des zweiten Schaftbereichs (20) des Steckerschaftes (6) ist, dass jedes Ringsegment (22) in der Grundstellung mit seinen beiden in Umfangsrichtung weisenden Endbereichen in radialer Richtung weiter von dem kleineren Durchmesser (*di*) beabstandet ist als in seinem mittleren Umfangsbereich.

2. Steckkupplung nach Anspruch 1,
**dadurch gekennzeichnet, daß** der Innenradius (*ri*) jedes Ringsegmentes (22) zumindest annähernd gleich der Hälfte des Durchmessers (*da*) des ersten Schaftbereichs (18) des Steckerschaftes (6) ist.

3. Steckkupplung nach Anspruch 1 oder 2,
**dadurch gekennzeichnet, daß** die Ringsegmente (22) in ihrer Grundstellung in Umfangsrichtung derart direkt aneinander anliegen, daß sie gemeinsam etwa die Form eines Polygons bilden, wobei die Ringsegmente (22) mit ihren aneinander anliegenden Stirnflächen (26) Polygonecken (28) und mit ihrem Kreisringverlauf entsprechend kreisbogenförmig gekrümmte Polygonseiten (30) bilden.

4. Steckkupplung nach einem der Ansprüche 1 bis 3,
**dadurch gekennzeichnet, daß** imgesteckten und arretierten Zustand des Steckerschaftes (6) sich jedes Ringsegment (22) axial in Löserichtung des Steckerschaftes (6) gesehen einerseits mit einer ersten, äußeren Teilfläche (36) in axialer Überdeckung mit einer radialen Flankenfläche (38) der Gehäuse-Ringkammer (14) und andererseits mit einer zweiten, inneren Teilfläche (40) in axialer Überdeckung mit der radialen Raststufe (16) des Steckerschaftes (6) befindet, wobei das Verhältnis der ersten Teilfläche (36) zu der zweiten Teilfläche (40) etwa 1: 1 beträgt, insbesondere aber etwa im Bereich von 1,4 : 1 bis 1,6 : 1, vorzugsweise bei etwa 1,5 1, liegt.

5. Steckkupplung nach einem der Ansprüche 1 bis 4,
**dadurch gekennzeichnet, daß** die Ringsegmente (22) über Zentriermittel (42) selbstzentrierend in der Ringkammer (14) des Gehäuseteils (2) gelagert sind.

6. Steckkupplung nach Anspruch 5,
**dadurch gekennzeichnet, daß** das Federelement (24) als Profilring aus einem gumielastischen Material ausgebildet ist, wobei der Profilring auf seinem Außenumfang elastisch verformbare Zentrierelemente (44) zur abstützenden Anlage innerhalb der Ringkammer (14) des Gehäuseteils (2) aufweist.

7. Steckkupplung nach Anspruch 5,
**dadurch gekennzeichnet, daß** die Ringsegmente (22) über einem elastisch verformbaren bzw. komprimierbaren Zentrierring (48) innerhalb der Gehäuse-Ringkammer (14) abgestützt sind.

8. Steckkupplung nach einem der Ansprüche 1 bis 7,
**dadurch gekennzeichnet, daß** das Halteelement (12) aus mindestens drei, insbesondere vier gleichartigen, in sich formstabilen Ringsegmenten (22) mit im Wesentlichen rechteckigem Ringquerschnitt besteht

9. Steckkupplung nach einem der Ansprüche 1 bis 8,
**gekennzeichnet, durch** eine in einem Ringspalt zwischen dem Steckerschaft (6) und der Aufnahmeöffnung (8) des Gehäuseteils 82) axial verschiebbar angeordnete Lösehülse (50) zum Spreizen der Ringsegmente (22) zum Lösen und Herausziehen des Steckerteils (4).

10. Steckkupplung nach Anspruch 9,
**dadurch gekennzeichnet, daß** die Lösehülse (50) als durchgehend geschlitztes Formteil aus Kunststoff ausgebildet ist.

11. Steckkupplung nach Anspruch 9,
**dadurch gekennzeichnet, daß** die Lösehülse (50) als Blechformteil ausgebildet ist, wobei an einer am Umfang gebildeten Nahtstelle (52) zwei Blechkanten (54) in axialer Richtung gesehen formschlüssig gegeneinander fixiert sind.

12. Steckkupplung nach einem der Ansprüche 9 bis 11,
**dadurch gekennzeichnet, daß** die Lösehülse (50) einen außerhalb der Gehäuse-Aufnahmeöffnung (8) zugänglichen, radialen, insbesondere flanschartigen oder aus sternförmigen Ansätzen - bestehenden Betätigungsabschnitt (58) aufweist.

13. Steckkupplung nach einem der Ansprüche 1 bis 12,
**gekennzeichnet durch** eine den Verbindungsbereich zwischen Steckerteil (4) und Gehäuseteil (2) umschließende Schutzkappe (60).

14. Steckkupplung nach Anspruch 13,
**dadurch gekennzeichnet, daß** die Schutzkappe (60) mit der Lösehülse (50), insbesondere mit deren Betätigungsabschnitt (58), derart verbunden ist, daß die Lösehülse (50) über die Schutzkappe (60) betätigbar ist.

15. Steckkupplung nach einem der Ansprüche 1 bis 14,
**gekennzeichnet durch** ein derart axial zwischen dem Halteelement (12) und insbesondere dem Gehäuseteil (2) angeordnetes Drucklager (7), daß das eingesteckte und über das Halteelement (12) gegen Lösen arretierte Steckerteil (4) auch bei Beaufschlagung mit einer in Löserichtung wirkenden Kraft über das Drehlager (70) relativ zu dem Gehäuseteil (2) um die Kupplungsachse (*X*) verdrehbar ist.

16. Steckkupplung nach einem der Ansprüche 1 bis 15,
**gekennzeichnet durch** Mittel zur Einsteckkontrolle derart, daß eine korrekte Arretierung des Steckerteils (4) über das eingerastete Halteelement (12) anhand der Relativstellung zwischen Stecker- und Gehäuseteil (4, 2) insbesondere visuell erkennbar ist.

17. Steckkupplung nach einem der Ansprüche 1 bis 16,
**dadurch gekennzeichnet, daß** das Gehäuseteil (2) derart aus zwei miteinander verbundenen Teilen, und zwar aus einem Basisteil (2a) und einem im Wesentlichen ringförmigen Einsatzteil (2b), besteht, daß die das Halteelement (12) aufnehmende Ringkammer (14) von diesen beiden Teilen (2a, 2b) begrenzt wird.

18. Steckkupplung nach einem der Ansprüche 1 bis 16,
**dadurch gekennzeichnet, daß** das Gehäuseteil (2) im Bereich der Aufnahmeöffnung (8) und der Ringkammer (14) für das Halteelement (12) einteilig ausgebildet ist.

19. Verfahren zum Montieren eines Gehäuseteils (2) einer Steckkupplung nach Anspruch 18,
**dadurch gekennzeichnet, daß** zunächst das Federelement (24) in die Ringkammer (14) des Gehäuseteils (2) eingelegt wird, und daß dann die Ringsegmente (22) des Halteelementes (12) einzeln axial in die Aufnahmeöffnung (8) eingeführt und radial gegen das Federelement (24) in die Ringkammer (14) eingebracht werden, wobei jedes Ringsegment (22) solange in der Ringkammer (14) zwischenfixiert wird, bis sich alle Ringsegmente (22) gegenseitig durch Anlage aneinander fixieren.

## Claims

1. Plug-in coupling for pressure or flow-medium lines, comprising a housing part (2) and a plug part (4), it being possible for the plug part (4) to be plugged with a plug shank (6) in a sealed manner into a receiving opening (8) in the housing part (2) and to be locked against detachment by means of a locking device (10), the locking device (10) having a retaining element (12) which is substantially annular, is mounted in an annular chamber (14) within the receiving opening (8) in the housing part (2), can be deformed elastically and in the plugged-in state of the plug part (4), engages in a latching manner and with a form fit behind a latching step (16) which is formed on the plug shank (6) between a first shank area (18) with a larger diameter (*da*) and a second shank area (20) with a smaller diameter (*di*), and the retaining element (12) comprising a plurality of individual annular segments (22) and a spring element (24) which acts thereon with a spring force (*F*) which acts radially, in such a way that during the plug-in operation, each annular segment (22) can be moved radially outwards from a basic position, counter to the spring force (*F*) or radially inwards into the basic position by the spring force (*F*), **characterized in that** each annular segment (22) is formed as a circular ring section with an internal radius (*ri*) which is greater than half the smaller diameter (*di*) of the second shank area (20) of the plug shank (6), such that each annular segment (22) in the basic position is spaced apart further in the radial direction from the smaller diameter (*di*) with its two end areas pointing in the circumferential direction than in its central circumferential area.

2. Plug-in coupling according to Claim 1, **characterized in that** the internal radius (*ri*) of each annular segment (22) is at least approximately equal to half the diameter (*da*) of the first shank area (18) of the plug shank (6).

3. Plug-in coupling according to Claim 1 or 2, **characterized in that** in their basic position, the annular segments (22) bear directly on one another in the circumferential direction in such a way that they jointly form approximately the shape of a polygon, the annular segments (22) forming polygon corners (28) with their end faces (26) bearing on one another, and polygon sides (30) which are curved in a circular arc shape corresponding to the course of their circular ring.

4. Plug-in coupling according to one of Claims 1 to 3, **characterized in that** in the plugged-in and locked state of the plug shank (6), each annular segment (22), as viewed axially in the detachment dirsction of the plug shank (6), is located on one side with a first, outer part face (36) axially overlapping a radial flank face (38) of the housing annular chamber (14) and, on the other side, with a second, inner part face (40) axially overlapping the radial latching step (16) of the plug shank (6), the ratio of the first part face (36) to the second part face (40) being about 1:1, but in particular approximately in the range from 1.4:1 to 1,6:1, preferably at about 1.5:1.

5. Plug-in coupling according to one of Claims 1 to 4, **characterized in that** the annular segments (22) are mounted in a self-centring manner via centring means (42) in the annular chamber (14) of the housing part (2).

6. Plug-in coupling according to Claim 5, **characterized in that** the spring element (24) is formed as a profiled ring of a resilient material, the profiled ring having on its outer circumference elastically deformable centring elements (44) to provide supporting contact within the annular chamber (14) of the housing part (2).

7. Flug-in coupling according to Claim 5, **characterized in that** the annular segments (22) are supported by an elastically deformable or compressible centring ring (48) within the housing annular chamber (14).

8. Plug-in coupling according to one of Claims 1 to 7, **characterized in that** the retaining element (12) comprises at least three, in particular four, identical, intrinsically dimensionally stable annular segments (22) with a substantially rectangular annular cross section.

9. Plug-in coupling according to one of Claims 1 to 8, **characterized by** a release sleeve (50) arranged such that it can be displaced aseially in an annular gap between the plug shank (6) and the receiving opening (8) in the housing part (2), to spread the annular segments (22) in order to release and pull out the plug part (4).

10. Plug-in coupling according to Claim 9, **characterized in that** the release sleeve (50) is formed as a continuously slotted plastic moulding.

11. Plug-in coupling according to Claim 9, **characterized in that** the release sleeve (50) is formed as a sheet-metal moulding, two sheet-metal edges (54) being fixed with respect to each other with a form fit, as viewed in the axial direction, at a seam (52) formed on the circumference.

12. Plug-in coupling according to one of Claims 9 to 11, **characterized in that** the release sleeve (50) has an actuating section (58) which is accessible outside the housing receiving opening (8), is radial, in particular flange-like or consists of star-like attachments.

13. Plug-in coupling according to one of Claims 1 to 12, **characterized by** a protective cap (60) which encloses the connecting area between the plug part (4) and housing part (2).

14. Plug-in coupling according to Claim 13, **characterized in that** the protective cap (60) is connected to the release sleeve (50), in particular to the actuating section (58) of the latter, in such a way that the release sleeve (50) can be actuated via the protective cap (60).

15. Plug-in coupling according to one of Claims 1 to 14, **characterized by** a thrust bearing (7) which is arranged axially between the retaining element (12) and in particular the housing part (2) in such a way that the plug part (4) plugged in and locked against a detachment by the retaining element (12) can be rotated about the coupling axis (*X*) relative to the housing part (2) via the rotary bearing (70) even when acted on by a force acting in the release direction.

16. Plug-in coupling according to one of Claims 1 to 15, **characterized by** means for checking the plugging-in in such a way that correct locking of the plug part (4) via the latched-in retaining element (12) can be detected, in particular visually, by using the relative position between plug part and housing part (4, 2).

17. Plug-in coupling according to one of Claims 1 to 16, **characterized in that** the housing part (2) comprises two interconnected parts, specifically a base part (2a) and a substantially annular insert part (2b), in such a way that the annular chamber (14) that accommodates the retaining element (12) is bounded by these two parts (2a, 2b).

18. Plug-in coupling according to one of Claims 1 to 16, **characterized in that** the housing part (2) is formed in one piece in the area of the receiving opening (8) and the annular chamber (14) for the retaining element (12).

19. A method of mounting a housing part (2) of a plug-in coupling according to Claim 18, **characterized in that** firstly the spring element (24) is placed in the annular chamber (14) of the housing part (2), and **in that** the annular segments (22) of the retaining element (12) are then inserted individually and axially into the receiving opening (8) and are introduced into the annular chamber (14) radially against the spring element (24), each annular segment (22) being temporarily fixed in the annular chamber (14) until all the annular segments (22) are mutually fixed by contact with one another.

## Revendications

1. Raccord à emboîtement pour tuyauteries de fluides sous pression, respectivement de fluides s'écoulant, comprenant une partie boîtier (2) et une partie à emboîter (4), la partie à emboîter (4) pouvant être emboîtée avec un corps d'emboîtement (6) de manière étanche dans une ouverture de réception (8) de la partie boîtier (2) et être bloquée pour empêcher la séparation au moyen d'un dispositif de verrouillage (10), ledit dispositif de verrouillage (10) présentant un élément de retenue (12) de forme essentiellement annulaire, logé dans une chambre annulaire (14) à l'intérieur de l'ouverture de réception (8) de la partie boîtier (2), déformable élastiquement et s'engageant en bloquant, de manière solidaire avec correspondance, de forme, dans la position d'emboîtement de la partie à emboîter (4), derrière un cran de blocage (16) formé sur le corps d'emboîtement (6) entre une première zone du corps (18) de plus grand diamètre (da) et une deuxième zone du corps (20) de plus petit diamètre (di), et l'élément de retenue (12) étant constitué de plusieurs segments d'anneau individuels (22), ainsi que d'un élément élastique (24) soumettant lesdits segments d'anneau à une force élastique (F) s'exerçant dans le sens radial, de façon que, lors du processus d'emboîtement, chaque segment d'anneau (22) puisse se déplacer, à partir d'une position de base, dans le sens radial vers l'extérieur contre la force élastique (F), respectivement vers la position de base dans le sens radial vers l'intérieur par la force élastique (F), **caractérisé en ce que** chaque segment d'anneau (22) est conçu comme un segment d'anneau circulaire avec un rayon intérieur (ri) qui est plus grand que la moitié du plus petit diamètre (di) de la deuxième zone (20) du corps d'emboîtement (6), de telle sorte que chaque segment d'anneau (22), dans la position de base, soit davantage éloigné, dans le sens radial, du plus petit diamètre (di) avec ses deux zones d'extrémité regardant dans le sens circonférentiel que dans sa zone périphérique moyenne.

2. Raccord à emboîtement selon la revendication 1, **caractérisé en ce que** le rayon intérieur (ri) de chaque segment d'anneau (22) est au moins de manière approchée égal à la moitié du diamètre (da) de la première zone (18) du corps d'emboîtement (6).

3. Raccord à emboîtement selon la revendication 1 ou 2, **caractérisé en ce que** les segments d'anneau (22), dans leur position de base, reposent directement l'un contre l'autre dans le sens circonférentiel, de façon à former ensemble à peu près la forme d'un polygone, les segments d'anneau (22) formant, avec leurs surfaces d'extrémité (26) adjacentes l'une à l'autre, des angles de polygone (28) et avec leur tracé en anneau circulaire, des côtés de polygone (30) cintrés de manière correspondante en forme d'arc de cercle.

4. Raccord à emboîtement selon l'une des revendications 1 à 3, **caractérisé en ce que**, dans la position d'emboîtement et de blocage du corps d'emboîtement (6), chaque segment d'anneau (22) se trouve, quand on regarde dans le sens axial dans la direction de séparation du corps d'emboîtement (6), avec une première surface partielle extérieure (36) recouvrant dans le sens axial une surface de flanc radiale (38) de la chambre annulaire (14) du boîtier, d'une part, et avec une deuxième surface partielle intérieure (40) recouvrant dans le sens axial le cran de blocage radial (16) du corps d'emboîtement (6), d'autre part, le rapport entre la première surface partielle (36) et la deuxième surface partielle (40) étant d'environ 1: 1, mais situé en particulier dans une plage allant de 1,4 : 1 à 1,6:1, de préférence d'à peu près 1,5 : 1.

5. Raccord à emboîtement selon l'une des revendications 1 à 4, **caractérisé en ce que** les segments d'anneau (22) sont logés par l'intermédiaire de moyens de centrage (22) à centrage automatique dans la chambre annulaire (14) de la partie boîtier (2).

6. Raccord à emboîtement selon la revendication 5, **caractérisé en ce que** l'élément élastique (24) est conçu comme une bague profilée réalisée dans un matériau élastique en caoutchouc, la bague profilée présentant, sur sa périphérie extérieure, des éléments de centrage (44) déformables élastiquement, prévus pour s'appuyer à l'intérieur de la chambre annulaire (14) de la partie boîtier (2).

7. Raccord à emboîtement selon la revendication 5, **caractérisé en ce que** les segments d'anneau (22) sont appuyés sur une bague de centrage (48) pouvant se déformer de manière élastique, respectivement se comprimer, à l'intérieur de la chambre annulaire du boîtier (14).

8. Raccord à emboîtement selon l'une des revendications 1 à 7, **caractérisé en ce que** l'élément de retenue (12) comprend au moins trois, en particulier quatre segments d'anneau (22) similaires, indéformables en soi, de section essentiellement rectangulaire.

9. Raccord à emboîtement selon l'une des revendications 1 à 8, **caractérisé par** une douille de séparation (50) disposée de manière mobile dans le sens axial dans une fente annulaire entre le corps d'emboîtement (6) et l'ouverture de réception (8) de la partie boîtier (2) pour écarter les segments d'anneau en vue de séparer et de retirer la partie à emboîter (4).

10. Raccord à emboîtement selon la revendication 9, **caractérisé en ce que** la douille de séparation (50) est conçue comme une pièce moulée en matière plastique fendue de manière continue.

11. Raccord à emboîtement selon la revendication 9, **caractérisé en ce que** la douille de séparation (50) est conçue comme une pièce usinée en tôle, deux arêtes de tôle (54) étant fixées l'une contre l'autre de manière solidaire avec correspondance de forme sur une jonction (52) formée sur la périphérie, quand on regarde dans le sens axial.

12. Raccord à emboîtement selon l'une des revendications 9 à 11, **caractérisé en ce que** la douille de séparation (50) présente un segment de manoeuvre (58) accessible à l'extérieur de l'ouverture de réception du boîtier (8), radial, en particulier en forme de bride, ou constitué d'appendices en forme d'étoile.

13. Raccord à emboîtement selon l'une des revendications 1 à 12, **caractérisé par** un capuchon de protection (60) enfermant la zone de liaison entre la partie à emboîter (4) et la partie boîtier (2).

14. Raccord à emboîtement selon la revendication 13, **caractérisé en ce que** le capuchon de protection (60) est relié avec la douille de séparation (50), en particulier avec son segment de manoeuvre (58), de telle sorte que la douille de séparation (50) peut être actionnée par l'intermédiaire du capuchon de protection (60).

15. Raccord à emboîtement selon l'une des revendications 1 à 14, **caractérisé par** un palier de butée (7) disposé dans le sens axial entre l'élément de retenue (12) et en particulier la partie boîtier (2), de façon que la partie à emboîter (4), emboîtée et bloquée pour empêcher la séparation par l'intermédiaire de l'élément de retenue (12), puisse tourner autour de l'axe d'accouplement (X) relativement à la partie boîtier (2) par l'intermédiaire du palier de rotation (70), même lorsqu'une force s'exerce dans la direction de la séparation.

16. Raccord à emboîtement selon l'une des revendications 1 à 15, **caractérisé par** des moyens de contrôle de l'emboîtement permettant de reconnaître, en particulier visuellement, à l'aide de la position relative entre partie à emboîter et partie boîtier (4, 2), que le blocage de la partie à emboîter (4) par l'intermédiaire de l'élément de retenue (12) est correct.

17. Raccord à emboîtement selon l'une des revendications 1 à 16, **caractérisé en ce que** la partie boîtier (2) comprend deux pièces reliées entre elles, à savoir une pièce de base (2a) et une pièce d'insertion (2b) essentiellement de forme annulaire, de telle sorte que la chambre annulaire (14) logeant l'élément de retenue (12) est délimitée par ces deux pièces (2a, 2b).

18. Raccord à emboîtement selon l'une des revendications 1 à 16, **caractérisé en ce que** la partie boîtier (2) est conçue d'un seul tenant dans la zone de l'ouverture de réception (8) et de la chambre annulaire (14) pour l'élément de retenue (12).

19. Procédé de montage d'une partie boîtier (2) d'un raccord à emboîtement selon la revendication 18, **caractérisé en ce que** l'élément élastique (24) est d'abord placé dans la chambre annulaire (14) de la partie boîtier (2) et qu'ensuite les segments d'anneau (22) de l'élément de retenue (12) sont introduits individuellement dans le sens axial dans l'ouverture de réception (8) et posés radialement dans la chambre annulaire (14) contre l'élément élastique (24), chaque segment d'anneau (22) étant fixé provisoirement dans la chambre annulaire (14) jusqu'à ce que tous les segments d'anneau (22) soient fixés l'un contre l'autre réciproquement par contact.
